# EUROPEAN PATENT SPECIFICATION

(11) **EP 3 837 941 B1**
(45) Date of publication and mention of the grant of the patent: **01.05.2024**
(21) Application number: 19218076.8
(22) Date of filing: 19.12.2019
(51) Int. Cl.: A01B 63/112, A01B 67/00

(54) **METHOD FOR CONTROLLING AN AGRICULTURAL SYSTEM**
VERFAHREN ZUR STEUERUNG EINES LANDWIRTSCHAFTLICHEN SYSTEMS
PROCÉDÉ DE COMMANDE D'UN SYSTÈME AGRICOLE

(43) Date of publication of application: 23.06.2021
(73) Proprietor: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: CNH Industrial IP Department

(56) References cited:
- EP-A1- 1 889 531
- EP-A2- 0 151 325
- JP-A- H0 866 107
- US-A- 4 077 475
- US-A1- 2008 257 569

## Description

### Background of the Invention

The present disclosure relates to a method for controlling an agricultural machinery, comprising particularly, but not exclusively, a plough. Other aspects of the present disclosure relate to an agricultural system and a computer program configured to perform the method.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clodhandling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs are often plough implements that include a plurality of plough bodies connected to a plough frame such that they are laterally offset manner from each other when the plough is in use. Each plough body is connected to the plough frame via corresponding beams. The plough frame, in turn, is connected to an agricultural work vehicle for towing or pushing the plough implement via a hitch arranged at a front or back end of the frame.

Ever increasing productivity demands require higher tillage efficiency and particularly a need for faster tillage processes. To this end, modern tillage implements, such as the above plough implements, are becoming ever larger (e.g. employing higher numbers of plough bodies) and heavier. Larger and heavier tillage implements, however, lead to an increase in work vehicle load, which needs to be offset by more powerful towing vehicles, such as tractors. It follows that modern tillage implements may only be hitched to more conventional agricultural work vehicles if the soil conditions are favourable and/or the operator is very experienced in working with high load implements so as to avoid repeated stalling or lugging of the work vehicle engine during the tillage process.

In view of the above, there is generally a need for an improved agricultural machinery and a method for controlling said agricultural machinery.

It is an aim of the present disclosure to solve or at least ameliorate one or more problems of the prior art.

EP1889531 A1 describes a draft load control system for an agricultural tractor having electronic engine and draft load controllers interconnected by a digital communications bus over which parameters for engine load are made readily available to the draft load controller. The draft load control system is suitable for front-mounted, rearmounted, or towed implements without requiring additional sensing equipment.

### Summary of the Invention

Aspects and embodiments of the disclosure provide a computer-implemented method for controlling an agricultural machinery, a control unit for use with an agricultural system, and a computer program as claimed in the appended claims.

According to an aspect of the present invention, there is provided a computer-implemented method for controlling agricultural machinery, wherein the agricultural machinery comprises an agricultural work vehicle with an engine for moving the agricultural work vehicle across a field, and an agricultural implement connectable to the agricultural work vehicle and comprising at least one ground engaging tool, wherein the method comprises:
receiving an engine operating parameter representative of an engine output of the engine;
comparing the engine operating parameter to a predetermined first threshold; and
determining an implement-control-signal, based on a result of the comparing step, for transferring the at least one ground engaging tool into an engine recovery state for reducing a work vehicle load, wherein the agricultural implement comprises a stone trip mechanism for biasing the at least one ground engaging tool into the soil at a predetermined bias force, the engine operating parameter being an engine-output-torque, and wherein the method further comprises producing an implement-control-signal comprising instructions for reducing the bias force if a difference between the engine operating parameter and the first threshold is below a predetermined stone-trip-bias-threshold.

In one embodiment, the first threshold is representative of an engine stall or an engine lug.

The engine operating parameter may be an engine speed or an engine torque.

In another embodiment, the implement-control-signal comprises one or more of:
instructions for changing the working depth of the ground engaging tool;
instructions for removing the ground engaging tool from the soil;
instructions for changing the plough width of the ground engaging tools;
instructions for changing the angle of the ground engaging tool with respect to a horizontal plane;
instructions for decreasing a bias of a stone-trip-mechanism of the ground engaging tools.

In another embodiment, the agricultural implement is a plough implement comprising a plurality of ground engaging tools for producing a plurality of parallel furrows for each working row of a field, wherein the method comprises producing an implement-control-signal comprising instructions for removing from the soil one or more ground engaging tools that exhibit the furthest distance to furrows of a previous working row.

The method may comprise providing the determined implement-control-signal to an actuator mechanism of the agricultural machinery between tillage of successive working rows.

The method may comprise delaying a transfer of the at least one ground engaging tool into the engine recovery state until a current working row is completed, if the comparison results indicates that a reduction in work vehicle load is required.

The method may comprise temporarily increasing a wheel torque of the agricultural work vehicle, if movement of the at least one ground engaging tool into its engine recovery state is delayed until the current working row is completed.

In one embodiment, the implement-control-signal is determined incrementally, preferably by:
determining a first implement-control-signal for transferring at least the one ground engaging tool into a first engine recovery state for reducing a work vehicle load;
comparing the engine operating parameter to the predetermined first threshold;
determining a second implement-control-signal, based on a result of the comparing step, for transferring at least one ground engaging tool into a second engine recovery state for reducing a work vehicle load further compared to the first engine recovery state.

In another embodiment, the implement-control-signal is determined on the basis of a difference between the operating parameter and the first threshold such that the engine operating parameter will exceed or fall below the predetermined first threshold upon transfer of the ground engaging tool into the engine recovery state.

In another embodiment, the method comprises maintaining the ground engaging tool in the engine recovery state for a predetermined recovery time after the engine parameter has exceeded or fallen below the predetermined first threshold.

In yet another embodiment, the method comprises maintaining the ground engaging tool in the engine recovery state until the engine parameter has exceeded or fallen below a predetermined second threshold.

In another aspect of the present disclosure, there is provided a control unit for use with an agricultural system, wherein the agricultural system comprises:
an agricultural work vehicle comprising an engine for moving the agricultural work vehicle;
an agricultural implement comprising at least one ground engaging tool;
a stone-trip-mechanism for biasing the at least one ground engaging tool into the soil at a predetermined bias force; and
the control unit is configured to:
   receive an engine operating parameter representative of an engine output;
   compare the engine operating parameter to a predetermined first threshold;
   determine an implement-control-signal for moving the at least one ground engaging tool into an engine recovery state so as to reduce a load based on a result of the comparison; the engine operating parameter being an engine-output-torque, and wherein the control unit is further configured to produce an implement-control-signal comprising instructions for reducing the bias force if a difference between the engine operating parameter and the first threshold is below a predetermined stone-trip-bias-threshold.

According to another aspect of the present disclosure, there is provided a computer program configured to perform any of the above methods or to configure the above control unit The agricultural implement may be a fully-mounted agricultural implement.

There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a micro control unit, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle (such as a tractor) may include one or more control units, such as but not limited to programmable or non-programmable processors. Similarly, the agricultural implement may include one or more control units, such as but not limited to programmable or non-programmable processors. Additionally, or alternatively, the implement may be controlled by one or more control units of the agricultural work vehicle. Similarly, the agricultural work vehicle may be controlled by one or more control units of the agricultural implement.

The agricultural work vehicle and/or the agricultural implement may be remote controlled, e.g. from a farm office. Accordingly, the agricultural work vehicle may include one or more communication interfaces for connection to a remote processor and/or a remote control unit. Similarly, the agricultural implement may include one or more communication interfaces for connection to a remote processor and/or a remote control unit.

### Brief Description of the Drawings

One or more embodiments of the present disclosure will now be described by way of example only, with reference to the accompanying drawings, in which:
Figure 1A shows a right-side view of a plough implement with fixed ground engaging tools;
Figure 1B shows a left-side view of the plough implement shown in Figure 1A;
Figure 1C shows a plan view of the plough implement shown in Figure 1A;
Figure 2 shows a schematic plan view of a trajectory of an agricultural machinery on a field;
Figure 3 shows a schematic flow chart of a method according to an embodiment of the present disclosure;
Figure 4 shows a schematic chart illustrating an engine torque vs. engine speed characteristic of a typical agricultural work vehicle; and
Figure 5 shows a schematic chart illustrating an engine torque vs. engine speed characteristic of a typical agricultural work vehicle.

### Detailed Description of the Drawings

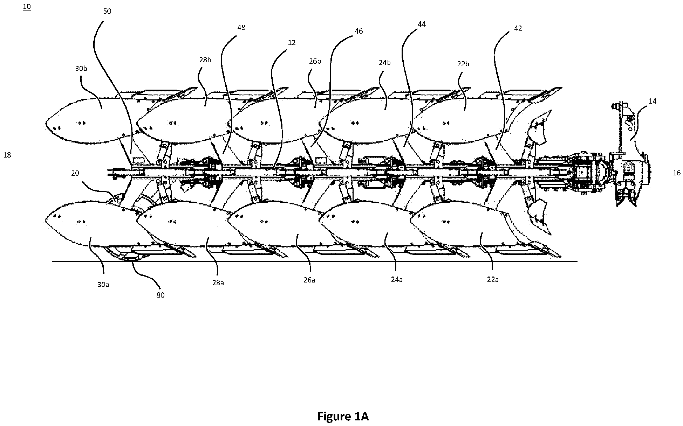

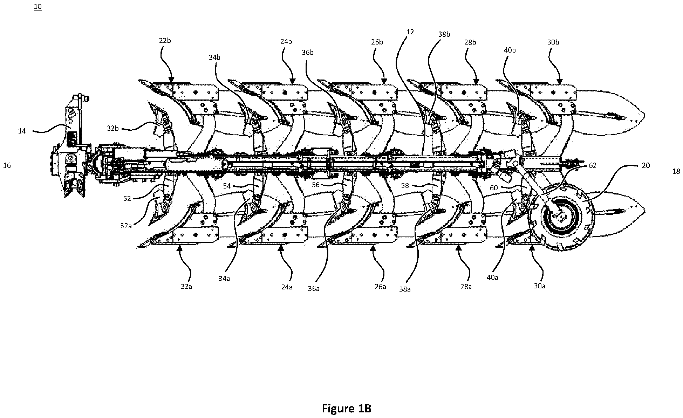

Figures 1A to 1C show various views of a tillage implement, particularly a plough implement 10. As will be described in more detail below, the plough implement 10 shown in Figures 1A to 1C is a reversible plough.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails 52, 54, 56, 58, 60 may be adjustable with respect to the main frame 12 to change the distance between the skimmers 32a, 32b, 34a, 34b, 36a, 36b, 38a, 38b, 40a, 40b and the main frame 12. In one example, the skimmers 32a, 32b, 34a, 34b, 36a, 36b, 38a, 38b, 40a, 40b may be movable up and down towards and away from the main frame 12 to individually adjust the working depth of each of skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

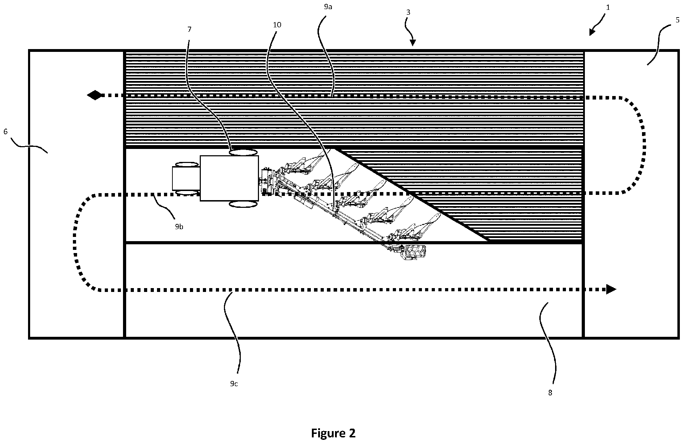

Turning to Figure 2, a typical operation of an agricultural machinery comprising an agricultural work vehicle 7 and a tillage implement, e.g. the plough implement 10, is described. In use, the plough implement 10 is drawn as an attachment (implement) behind the agricultural towing vehicle 7 (e.g. an agricultural work vehicle). It will be appreciated that it is equivalently feasible to locate the plough implement 10 in front of or both in front of and behind the agricultural work vehicle 7.

Figure 2 shows a schematic field 1, e.g. a crop field, which is divided into a main work area 3 and headlands 5,6. An agricultural work vehicle 7 draws the plough implement 10 across the work area 3 in generally parallel working rows 9a, 9b, 9c. The working rows 9a, 9b, 9c are part of the trajectory 8 of the agricultural work vehicle 7 and typically run in parallel with a long edge of the work area 1. Choosing to orientate the working rows 9a, 9b, 9c in parallel with the long edge of the work area will reduce the number of headland turns required. Each working row 9a, 9b, 9c represents an individual run of the agricultural machinery across the main area between headlands 5 and 6. As will be described in more detail below, a five-furrow plough, such as the exemplary plough shown in Figures 1A to 1C creates a total of five furrows per run/working row 9a, 9b, 9c.

It will be appreciated that, in the example of Figure 2, the agricultural machinery, i.e. the plough, has already completed the first working row 9a, which may thus be considered to be a past or completed working row. Furthermore, the plough is shown during work on the second work row 9b, which is adjacent and parallel to the first working row 9a. The second working row may be considered to be a current working row. A third working row 9c, which in Figure 2 is a future planned section of the trajectory 8, is adjacent and parallel to the second working row 9b. Work on the third working row 9c has not yet commenced and thus the third working row 9c may be considered to be a future working row.

At the end of each run/working row 9a, 9b, 9c, the agricultural work vehicle 7 and plough implement 10 use the upcoming headland 5 or 6 for turning around, as indicated by trajectory 8. The soil of the headlands 5, 6 may subject to greater levels of soil compaction as it receives more traffic per unit area than the work area 3. In order not to disturb the soil of the headlands 5, 6 more than necessary, the ground engaging tools, such as the plough bodies and the skimmers, are lifted off the ground into a headland or transfer position, just before the plough implement 10 reaches the headlands 5, 6 respectively. Once the agricultural work vehicle 7 and the corresponding plough implement 10 have turned on the headland 5, 6, the ground engaging tools of the plough implement 10 are, again, lowered towards an operating position to engage the soil of the work area 3.

In the illustration of Figure 2, the plough implement 10 is working on the second working row 9b and, therefore, is arranged in the operating position. As the plough implement 10 reaches the boundary between the headland 5, 6 and the work area 3, the plough implement 10 is transferred to a headland/transfer position. It follows that each working row starts with an adjustment of the plough from the headland position into the operating position and ends with an adjustment of the plough from the operating position into the headland position.

Once the plough implement has been transferred into its headland position, the agricultural machinery, including the agricultural work vehicle 7 and the plough implement 10, can be turned back on itself such that the latter faces an opposite direction for the next run on the adjacent working row. In the schematic illustration of Figure 2, a headland routine is illustrated, often described as a "U-turn". The "U-turn" is one of the more basic headland routines and will be described in more detail below. Typically, the operator merely turns the steering wheel until a full 180 degree turn has been completed and work on the next working row can be commenced.

The plough implement 10 shown in Figures 1A to 1C is of the fully-mounted type. In fully-mounted ploughs, the weight of the plough is carried exclusively by the agricultural work vehicle when the plough is in its transfer/headland position (on the headlands). In other words, the plough is then exclusively supported by the agricultural work vehicle 7 via headstock 14 and may be lifted off the ground with a lift cylinder of a tractor linkage.

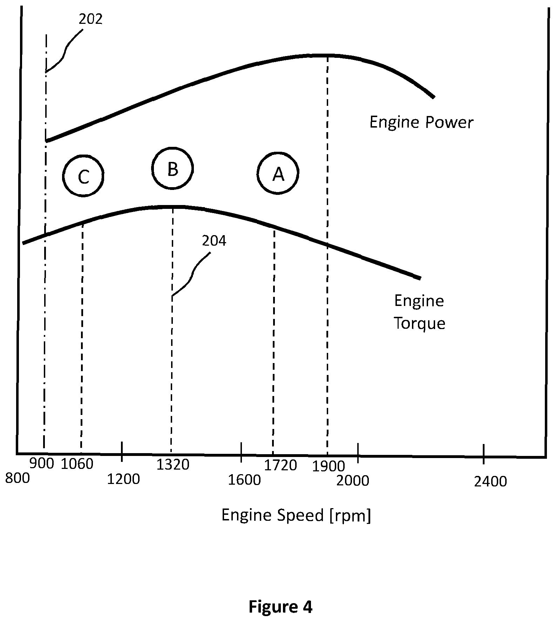

During the turning routine on the headlands, the plough implement 10 is also reversed. That is, the main frame 12 is rotated by 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of agricultural work vehicle 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the agricultural work vehicle (not shown). The second configuration is, therefore, also sometimes referred to as the "right side configuration".

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

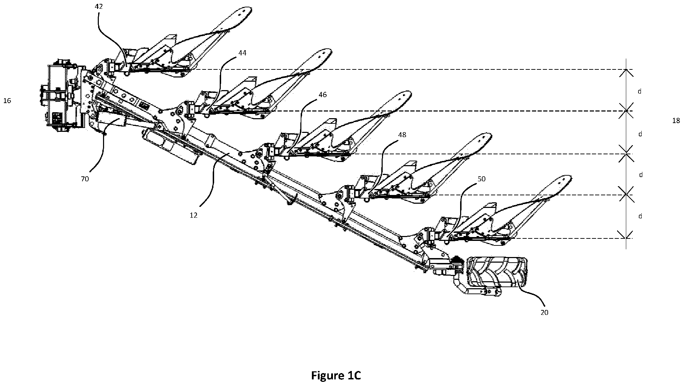

A furrow width is determined by the lateral distance d between the plough bodies 22a, 22b, 24a, 24b, 26a, 26b, 28a, 28b, 30a, 30b, as illustrated in Figure 1C. The lateral distance d between the plough bodies may be adjusted by a plough-width-adjustment-actuator 70, which in this embodiment is a hydraulic cylinder. The plough-width-adjustment-actuator 70 is connected on one end to the main frame 12 and configured to change the angle of the main frame 12 with respect to a direction of travel. Generally, extending the plough-width-adjustment-actuator 70 will reduce the angle of the main frame 12 with respect to a direction of travel and thus decrease the distance d between adjacent plough bodies. Retracting the plough-width-adjustment-actuator 70 will, in turn, increase the angle of the main frame 12 with respect to a direction of travel thus increase the distance d between adjacent plough bodies.

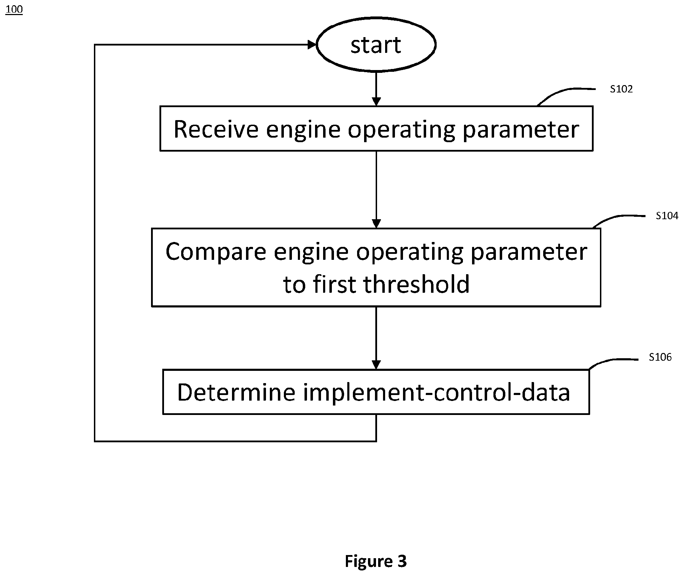

Turning to Figure 3, there is shown an embodiment of a computer-implemented method according to the present disclosure. The method illustrated in Figure 3 can reduce or avoid lugging or stalling of an engine of the agricultural work vehicle due to temporary or unexpected load variations during operation. The method shown in Figure 3 may be performed on an agricultural machinery including an agricultural work vehicle comprising an engine for moving the agricultural work vehicle across the field, and an agricultural implement connectable to the agricultural work vehicle. The agricultural implement can be the agricultural plough implement 10 described hereinbefore. Although the following generally refers to more conventional internal combustion engines, it will be appreciated that the method of the present disclosure may also be applied to other prime movers, e.g. electric or hydraulic motors for moving the agricultural work vehicle.

In a first step S102, the method of Figure 3 comprises receiving an engine operating parameter representative of an engine output. In some examples, the engine operating parameter may be an engine speed and/or an engine torque. It will be appreciated that the speed and torque of an engine are related to each other and can be derived from each other on the basis of known engine power characteristics. The engine operating parameters may be obtained by any known sensor associated with the agricultural work vehicle.

In a second step S104, the method comprises comparing the engine operating parameter to a predetermined first threshold. The first threshold may be representative of an imminent engine stalling or an engine lugging event. In other words, a comparison between the engine operating parameter and the predetermined first threshold will provide an indication of whether the engine is about to stall or lug. Of course, it is desirable to avoid both of these states. In some embodiments, an imminent engine stall or engine lug is represented by the engine operating parameter falling below the first threshold. As will be described in more detail below, this may be the case if a work vehicle load exceeds a maximum output torque of the engine at a given gear ratio.

Based on a result of the comparing step S104, the method determines an implement-control-signal for transferring the at least one ground engaging tool into an engine recovery state, in a third step S106, in order to reduce a work vehicle load. In some embodiments, if the comparison result of S104 indicates that the received engine operating parameter has fallen below the predetermined first threshold, the method may include determining an appropriate implement-control-signal that may result in the engine operating parameter exceeding the predetermined first threshold, upon transfer of the ground engaging tool into the engine recovery state.

As will be appreciated, the term *"engine recovery state"* refers to various states of the ground engaging tools that may lower a current or future load experienced by the work vehicle. It should be noted that the engine recovery state does not necessarily need to result in an instant load decrease. Rather, as will be described in more detail below, the engine recovery state may be a change in the ground engaging tool settings that avoids excessive future work vehicle load that could otherwise cause the engine to stall or lug. The method may be executed by a control unit that is configured to determine a variety of implement-control-signals that may transfer the at least one ground engaging tool into various different engine recovery states for reducing current or future work vehicle loads.

An appropriate implement-control-signal is determined by the control unit on the basis of the comparison result between the engine operating parameter and the predetermined first threshold. In one example, the engine operating parameter may be an engine speed. The engine speed may be provided to the control unit in the form of engine-speed-data by means of a suitable engine output speed sensor. The control unit may be configured to compare the speed values of the engine-speed-data to a first threshold, such as an engine-speed-threshold. If one or more speed values of the engine-speed-data fall below the engine-speed-threshold, the control-unit may take remedial action by generating an appropriate implement-control-signal for reducing the load. The implement-control-signal may put the at least one ground engaging tool into a predetermined position when it enters the engine recovery state (for example it may put a plough body into a predetermined position that is expected to reduce the load on the work vehicle). The control unit may be configured to look-up a suitable implement-control-signal that is applicable to bring a plough body into the predetermined position, on the basis of the comparison result. For example, the control unit may determine a difference between the operating parameter and the first threshold and lookup a suitable implement-control-signal based on said difference. The control-unit may be configured to generate implement-control-signals for greater load reductions the higher difference between the operating parameter and the first threshold is. Alternatively, the control unit may generate an implement-control-signal that may change a current position of the at least one ground engaging tool by a predetermined offset amount when it enters the engine recovery state. In some examples, the implement-control-signal may increase the predetermined offset amount over time, while the at least one ground engaging tool is in the engine recovery state. For instance, the implement-control-signal may raise the at least one ground engaging tool by a predetermined offset distance (such as 10cm) periodically (for instance every 10 seconds) while the at least one ground engaging tool is in the engine recovery state.

If the engine-speed-data indicates that the output speed of the engine remains above the engine-speed-threshold, the control-unit may not generate an implement-control-signal such that the agricultural implement is operated in its normal mode of operation. That is, the implement-control-signal may no longer overrule a normal operating mode of the implement. Alternatively the implement-control-signal may maintain the status of the ground engaging tools in their current position, and thus maintain the load experienced by the engine, when the engine-speed-data indicates that the output speed of the engine is above the engine-speed-threshold. This can enable the agricultural implement to continue to operate without stalling the engine.

In another embodiment, the engine operating parameter may be representative of an engine output torque. This operating parameter may be provided to the control unit as engine-torque-data by a suitable engine output torque sensor. The control-unit may compare the values of the engine-torque-data with a predetermined engine-torque-threshold and take remedial action with an appropriate implement-control-signal if one or more of the engine-torque-data values fall below the engine-torque-threshold.

A non-exhaustive list of example instructions included in the implement-control-signal is shown below:
In a first embodiment, the implement-control-signal determined by the control unit may comprise instructions for changing the working depth of the ground engaging tool. In the case of the plough implement 10, the implement-control-signal of this embodiment may result in a change of the working depth of all of the first plurality of plough bodies (cf. 22a, 24a, 26a, 28a, 30a of Figure 1A) and/or second plurality of plough bodies (cf. 22b, 24b, 26b, 28b, 30b) at the same time. For example, the implement-control-signal may reduce the working depth of all of the plough bodies in order to reduce the drag and, therefore, the load experienced by the work vehicle. Alternatively, or additionally, the implement-control-signal may result in an adjustment of the working depth of only one or some of the active plough bodies.

In some examples, the control unit may vary the amount of load reduction achieved in the engine recovery state depending on the amount of difference between the operating parameter and the first threshold. For instance, if the comparison result indicates that the engine operating parameter is far below the predetermined first threshold, the control unit may determine an implement-control-signal that results in an engine recovery state in which the working depth of one or more of the ground engaging tools is reduced more significantly. Similarly, smaller differences may cause the control unit to adjust the working depth of one or more of the ground engaging tools less. It will be appreciated that the more the working depth is changed when transferring the ground engaging tools into the engine recovery state, the more impact this engine recovery state will have on the work vehicle load. Accordingly, if the operating parameter falls below the first threshold, the control unit may be configured to calculate a difference between the operating parameter and the first threshold. On the basis of the difference, the control unit may determine a suitable implement-control-signal.

In another embodiment, the implement-control-signal may comprise instructions for removing the ground engaging tools from the soil. Rather than adjusting the working depth of the one or more ground engaging tools of the plough implement, the implement-control-signals of this embodiment may cause removal of the ground engaging tool/tools entirely from the soil during the engine recovery state. Again, it may be advantageous to remove one or some of the ground engaging tools from the soil in order to reduce the work vehicle load. The control unit may determine the number of ground engaging tools to be removed from the soil on the basis of a difference between the operating parameter and the first threshold.

In another example, the implement-control-signal comprises instructions for changing a plough width of the ground engaging tools when transferring the one or more ground engaging tools into their engine recovery state. As described with reference to Figure 1C, the angle of the main frame, and therefore, the plough width of the ground engaging tools may be changed with the plough-width-adjustment-actuator 70. As the angle between the main frame 12 and the direction of travel is increased, the plough width increases and so does the load experienced by the work vehicle. By contrast, if the angle between the main frame and the direction of travel is decreased, the plough width and the load experienced by the work vehicle decreases. Accordingly, if the comparison result between the engine operating parameter and the predetermined first threshold indicates that the engine operating parameter has fallen or is about to fall below the predetermined first threshold, the control unit may determine an implement-control-signal including instructions for reducing the angle of the frame with respect to the direction of travel, and therefore, reducing the plough width of the ground engaging tools in the engine recovery state. The control unit may determine the amount of change in plough width on the basis of a difference between the operating parameter and the first threshold.

In yet another embodiment, the control unit may determine an implement-control-signal comprising instructions for changing the angle of the ground engaging tool (such as an angle of attack) with respect to a horizontal plane when entering the engine recovery state. Typically, aligning the one or more ground engaging tools of the agricultural machinery with a horizontal plane (an angle of attack of 0°) will result in the least load experienced by the work vehicle. However, depending on the actuator mechanism for moving the ground engaging tools, a change in working depth, may result in the angle of the ground engaging tools being misaligned with the horizontal plane, resulting in increased work vehicle load. Accordingly, in some embodiments, the implement-control-signal may be determined by the control unit to transfer the at least one ground engaging tool into an engine recovery state, in which the at least one ground engaging tool is aligned with the horizontal plane. To this end, the control unit may determine a current angle between a share of one or more of the plough bodies and a horizontal plane. If the engine operating parameter falls below the first threshold, the control-unit may determine an implement-control-signal for reducing the angle between a share of one or more of the plough bodies and the horizontal plane in the engine recovery state.

In another example, the implement-control-signal may comprise instructions for decreasing a bias of a stone-trip-mechanism of the ground engaging tools. Increasing the bias of the stone-trip-mechanism is an example of an embodiment in which the work vehicle load is not immediately reduced as the at least one ground engaging tool is transferred into the engine recovery state. Rather, reducing the bias of the stone-trip-mechanism will reduce the force required to activate the stone-trip-mechanism, i.e. the maximum resistance experienced by the work vehicle if the ground engaging tool collides with a subterranean obstacle. Consider a scenario in which an agricultural plough is ploughing a field at a load that is close to its maximum engine torque. In other words, the work vehicle load experienced during normal operation, which is generally dependent on factors such as the ground contours and the soil density, may be such that the engine operating parameter is just above the predetermined first threshold. In this case, if a sudden increase in work vehicle load occurs (as represented by an engine operating parameter), e.g. if the agricultural plough implement hits a large obstacle within the field, there is a high probability of the engine stalling unexpectedly. If the stone-trip-mechanism is set with a large bias, then the ground engaging tools may try to plough through large obstacles without activation of the stone-trip. This may cause a significant increase of the work vehicle load until the obstacle has been passed, which may result in engine failure. This is particularly so if the engine is already working close to its maximum torque output before the obstacle is encountered. To prevent such a scenario, the control unit may determine an implement-control-signal comprising instructions for decreasing the bias of the stone-trip-mechanism, particularly in cases where the engine operating parameter is close to the predetermined first threshold. To this end, the control unit may determine a difference between the engine operating parameter and the first threshold. The control unit may then compare the difference between the first the engine operating parameter and the first threshold with a second threshold, e.g. a stone-trip-bias-threshold. If the difference between the first the engine operating parameter and the first threshold falls below the stone-trip-bias-threshold, the control unit may determine an implement-control-signal applicable to decrease the bias of one or more stone-trip-mechanisms of the plough implement in the engine recovery state. In some examples, the stone-trip-bias-threshold may be set to be 10% to 30% of the first threshold. Decreasing the bias of the stone-trip-mechanism in the engine recovery state of the ground engaging tools will reduce future load increase experienced by the work vehicle due to obstacles encountered by the ground engaging tool and may, thus, avoid unexpected engine stalling.

In order to transfer the one or more ground engaging tools into the various exemplary engine recovery states discussed above, the control unit may be configured to provide the implement-control-signal to a supply circuit that is connected to actuators of a corresponding adjustment mechanism. In one embodiment, the control unit may provide the implement-control-signal to a valve of a hydraulic fluid supply circuit to control an amount of hydraulic fluid provided to a hydraulic actuator of the adjustment mechanism that will result in transferral into a desired engine recovery state of one or more of the ground engaging tools. Of course, the implement-control-signal may also be provided to other supply circuits, such as electric power supply circuits, pneumatic fluid supply circuits, etc, depending on the type of actuator used by the adjustment mechanism.

Turning back to Figure 2, a particular example, in which the implement-control-signal comprises instructions for removing one or more of the ground engaging tool from the soil in to enter the engine recovery state will be explained in more detail. In the situation depicted in Figure 2, the agricultural machinery has completed the first working row 9a and is currently processing the adjacent, second working row 9b. The plough implement 10 of Figure 2 includes five plough bodies, such as plough bodies 22a, 24a, 26a, 28a, and 30a shown in Figures 1A to 1C. Accordingly, when ploughing the working rows 9a, 9b, 9c shown in Figure 2, the plough implement 10 creates five parallel furrows per run/working row if all of the plough bodies are in contact with the soil.

Consider a situation in which the agricultural machinery is working on the second working row 9b with all of the five plough bodies contacting the soil at the same working depth, thereby creating five homogeneous furrows. If a control unit determines, during the ploughing process of the second working row 9b, that (due to a work vehicle load increase) the engine operating parameter has fallen below the predetermined first threshold there may be a need to reduce the work vehicle load in order to prevent engine lugging or stalling. However, as described in detail above, most of the implement-control-signals will change the position of the ground engaging tools (e.g. the plough bodies) and, therefore, may cause a variation in the shape and quality of the furrows created on the second working row 9b. In other words, if the ground engaging tools of the plough implement 10 are moved into their engine recovery state during the operation of a working row, i.e. before the working row is completed, a likely outcome is that the furrows will be unsatisfactory to the operator. For example, if the control-unit determined an implement-control-signal that immediately moves one of the plough bodies out of the soil (i.e. during operation of the second working row 9b), then parts of the working row 9b will exhibit five parallel furrows, whereas the remainder of the working row will only exhibit four furrows.

In order to prevent the above change in the number of furrows during tillage of a working row, the control unit may be configured to provide the determined implement-control-signal to an adjustment mechanism of the agricultural machinery, such as a plough body lifting mechanism, between tillage of successive working rows. In other words, the control unit may only provide the adjustment mechanism with the corresponding implement-control-signal, once a current working row has been completed. In most cases, this will coincide with a headland turning routine, during which none of the ground engaging tools are typically in contact with the soil. This delay of a transfer of the ground engaging tool or tools into the engine recovery state until a current working row is completed ensures that each of the working rows exhibit a continuous profile. To this end, the control unit may be configured to receive location-data indicative of a position of the plough implement/the ground engaging tools within the field. The control unit may determine, on the basis of the location-data, whether or not the plough implement is currently tilling one of the working rows. If the control unit determines that the plough implement is not currently tilling one of the working rows, it may provide the above implement-control-signal to the adjustment mechanism to transfer one or more of the ground engaging tools into the engine recovery state, e.g. a position in which the tool/tools will be removed from the soil for the following working row/rows. Otherwise, if the control unit determines, on the basis of the location-data, that the plough implement is currently tilling a working row, the control unit may delay provision of the implement-control-signal to the adjustment mechanism until the working row is completed.

The above embodiment envisages delaying the provision of the implement-control-signal to the adjustment mechanism of the agricultural machinery until the working row is completed. In some embodiments, the control unit may only provide the implement-control-signal to the adjustment mechanism between working rows, if live or stored field-data, such as data indicative of contours of the field or soil conditions ahead of the agricultural machinery, indicates that the next working row will cause the same or higher work vehicle loads as the current working row. Otherwise, if the field-data indicates the loads acting on the agricultural machinery will be reduced during the next working row, the control unit may determine that a transferral of the ground engaging tools into their recover state (e.g. removal of one or more of the ground engaging tools from the soil) is not required for the next working row.

The control unit may be configured to selectively remove one or more ground engaging tools during once the current working row is completed. In one example, the control unit may be configured to remove the plough body that exhibits the furthest distance from the last furrow of the previous working row. In a reversible plough, the control unit may be configured to remove the last plough body of the frame (30a/30b in Figure 1A) such that the agricultural vehicle may continue to plough *"in furrow"* even if one or more of the plough bodies are removed from the soil.

If the provision of the implement-control-signal to the actuator mechanism for reducing the work vehicle load is delayed, there remains an increased likelihood of engine stalling or lugging during work on the current working row. In order to avoid lugging or stalling of the engine during such delays, the method may comprise temporarily increasing a wheel torque of the agricultural work vehicle (e.g. by adjusting the tractor transmission) until the ploughing process of the current working row is completed. It should be understood that increasing the wheel torque will often result in increased fuel consumption and/or increased wear of engine parts, such that according to the method of the present embodiment, this state will only be maintained until the current work row is completed.

Turning to Figure 4, there is shown a typical graph illustrating a tractor's engine torque versus engine speed as well as engine power versus engine speed. Of course, the engine speed values used in Figure 4 are chosen for exemplary purposes only and do not necessarily represent real world values.

As may be derived from the graph of Figure 4, the engine of the agricultural work vehicle of this example has a maximum torque output at an engine speed of 1,320rpm. The work vehicle engine power, which is a product of the engine torque and the engine speed, reaches its maximum at a higher engine speed, e.g. 1,900rpm. During normal operation, the engine of the agricultural work vehicle will typically be run at a speed that exhibits the most preferable fuel consumption and wear characteristics. This preferable engine speed is often defined by the manufacturer and usually below the speed for maximum power output of the engine, which in this example is around 1,900rpm. In the following, three scenarios A, B, C are described with their corresponding impact on the method of the present disclosure.

In a first scenario A, the work vehicle is operated at a standard engine speed of 1,720rpm. At this engine speed, the work vehicle engine is able to provide a torque output that is below the maximum torque output achievable at 1,320rpm. However, during normal operation, i.e. level grounds and expected soil density, the torque output of the engine will be sufficient to cope with the work vehicle loads produced by the agricultural implement. As the agricultural work vehicle navigates an incline or the soil density increases, for example, the load on the work vehicle increases. If the increased load on the work vehicle results in an engine load that exceeds the engine torque output at 1,720rpm, the engine will slow down to a speed at which more torque is available. In other words, the engine will slow down such that more torque is made available (i.e. up to the maximum torque at 1,320rpm) by the engine in order to compensate for the additional load on the work vehicle. This is also known as *"torque back-up".*

If the torque back up described above is sufficient to compensate for the increased vehicle load (e.g. due to an uphill climb), activation of the method of the present disclosure may not be required, since the additional load on the work vehicle may act to slow the work vehicle down but will not significantly increase the risk of engine lugging or stalling. However, should, in scenario A, the additional vehicle load exceed the maximum engine output torque at 1,320rpm, then the engine speed will decrease further down the torque curve in Figure 4 until significantly lower engine speeds are reached and stalling or lugging eventually occurs. A first threshold 202 may thus be an engine-speed-threshold set at an engine output speed that is below the engine speed at which the maximum engine output torque is achieved. In the example of Figure 4, the first threshold 202 may be set at 900 rpm, which is below 1320 rpm at which the maximum engine output torque is achieved. It follows that the control unit will not take remedial action, by transferring one or more of the ground engaging tools into their engine recovery state, until the drop in engine output speed indicates that the engine operates significantly below its maximum output torque speed.

In scenario B, the agricultural work vehicle is operated continuously at the maximum torque output engine speed of 1,320rpm. In this case, as soon as the load on the work vehicle exceeds the maximum output torque of the engine, the engine speed will fall until engine lugging or stalling occurs as the engine itself does not have sufficient output torque to maintain movement of the engine's flywheel against the increased load experienced by the agricultural vehicle. Again, the control unit will not take remedial action, by transferring one or more of the ground engaging tools into their engine recovery state, until the drop in engine output speed indicates that the engine operates at a speed below the first threshold 202.

In scenario C, the work vehicle engine is normally driven at an engine speed of around 1,060rpm, i.e. at a point along the torque curve, which is below the maximum engine torque output. Imagine the same situation as described in relation to scenario A, i.e. when the work vehicle encounters an uphill climb. In this case, the load on the work vehicle will increase and may exceed the torque output at 1,060rpm. Again, the engine speed will start reducing due to the increased load on the work vehicle. In order to compensate for the increased load, the operator or the control unit of the agricultural machinery may try to increase the engine output speed by opening the throttle further, so as to raise the engine output torque to its maximum at 1,320rpm. If the maximum engine output at 1,320rpm is sufficient to overcome the increased vehicle load due to the uphill climb, the work vehicle will maintain its engine output speed of 1,320rpm for as long as no additional load is encountered. This additional demand of scenario C is also known as a *"negative torque back-up".* However, similar to scenarios A and B, if the vehicle load increases to a value that exceeds the maximum output torque of the work vehicle engine, the engine speed will reduce until lugging or stalling occurs. The control unit may thus take remedial action when the engine speed falls below the first threshold 202.

In each of the three scenarios described above, the only way to avoid lugging or stalling of the work vehicle engine, if the vehicle load exceeds the maximum output torque of the engine, is to either reduce the load experienced by the work vehicle or to change the transmission in order to achieve sufficiently high wheel torques that can overcome the increased load experienced by the work vehicle.

As described above, in some scenarios, it is advantageous to delay the transfer of the ground engaging tools into the engine recovery state until the current working row has been completed. In order to delay transfer of one or more of the ground engaging tools into their engine recovery state, the control unit may take the following temporary actions if the engine output speed falls below the first threshold 202:
In scenarios A and B the control unit may be configured to change the vehicle transmission to temporarily achieve higher wheel output torque (e.g. until the end of the current working row), if the engine output speed falls below the first threshold 202. For instance, a change in the work vehicle's main transmission may increase the wheel output torque. However, at the same time, the field speed of the agricultural machinery will be reduced which affects the agricultural machinery's efficiency. As such, the control unit may be configured to change the transmission only temporarily, e.g. until the current working row is completed.

In scenario C, the control unit may initially try to increase the wheel torque output by opening the throttle of the work vehicle engine further, if the engine output speed drops below the first threshold 202. When further opening the throttle after the speed has fallen below the first threshold 202, the control unit may keep monitor the engine output speed to determine if the speed recovers, i.e. increases again. If the speed does not increase after opening the throttle, the control unit may again temporarily change the transmission to achieve higher wheel output torque until the current working row is completed.

Although transmission ratio changes may be a solution to many problems with increased work vehicle load, it will be appreciated that most conventional work vehicles do not include sophisticated transmissions that allow for various different transmission ratios depending on the work vehicle load experienced. In such cases, the only way to avoid stalling or lugging of the engine is to reduce the work vehicle load. Moreover, operating the agricultural machinery at a sub-optimal transmission ratio will have a negative impact on the fuel efficiency and emissions of the work vehicle. The control unit of the present disclosure may, therefore, be configured to transfer one or more of the ground engaging tools into an engine recovery state that will reduce the load on the agricultural work vehicle such that the work vehicle may consistently be operated at a preferred output speed.

As mentioned before, the first threshold 202 of Figure 4 is an engine speed threshold. The first threshold 202 of Figure 4 is at roughly 900rpm. If the control unit that is associated with the agricultural machinery determines that the engine speed has fallen below the first threshold 202, an implement-control-signal may be created for transferring the at least one ground engaging tool into an engine recovery state for reducing the work vehicle load. The implement-control-signal may be determined by the control unit such that the engine operating parameter will recover and eventually exceed the first predetermined threshold 202, after transfer of the ground engaging tool into the engine recovery state. To this end, the control unit may determine the load experienced by the work vehicle when the operating parameter falls below the first threshold 202 in order to determine an appropriate reaction. The vehicle load acting on the work vehicle may be provided to the control unit as vehicle-load-data by any suitable load sensor.

When the engine speed drops below the first threshold 202, the control unit may look up a suitable implement-control-signal in a memory or database on the basis of the vehicle-load-data. The so determined implement-control-signal may then be applied by the control unit to transfer one or more of the ground engaging tools into their engine recovery state and will be sufficient to reduce the vehicle load to a value that avoids stalling and/or lugging. Alternatively, the control unit may calculate a suitable implement-control-signal based on the load acting on the agricultural work vehicle when the speed falls below the first threshold 202.

In another example of the present disclosure, the implement-control-signal may be determined incrementally. For example, the control unit may determine a first implement-control-signal that comprises instructions for an actuator mechanism to remove one of the ground engaging tools from the soil if the engine speed drops below the first threshold 202. The control unit may be configured to monitor the engine output speed after the first implement-control-signal has been provided to the actuator mechanism. If, after the first implement-control-signal has been provided to the actuator mechanism (and thus a first ground engaging tool has been removed from the soil), the control unit determines that the engine speed still does not start to recover, i.e. if the engine speed does not increase, the control unit may determine a second implement-control-signal. The second implement-control-signal may instruct the actuator mechanism to remove a second ground engaging tool from the soil. It will be understood that the actuator mechanism of this embodiment may include at least one actuator per ground engaging, such that the first implement control-signal may be applicable to activate the first actuator, whereas the second implement-control-signal may be applicable to activate the second actuator. The control unit may incrementally reduce the work vehicle load more and more, by removing various ground engaging tools, until the control unit determines that the engine output speed starts recovering. Of course, in some embodiments, the control unit may additionally or alternatively determine implement-control-signals for incrementally adjusting other operating parameters of the plough. In particular, the control unit may determine implement-control-signals for reducing the plough width or the working depth of the plough bodies incrementally until the engine speed starts recovering. In other examples, the control unit may incrementally align the angle of one or more plough bodies with a horizontal plane. The control unit may monitor the engine speed to determine when the incremental adjustment of the ground engaging tools has led to an increase in engine output speed. The control unit may determine that no more adjustments are required when the engine output speed has started to recover, e.g. the engine output speed is increasing again after previously dropping below the first threshold 202.

Full recovery of the engine speed may be determined by the control unit by comparing the engine operating parameter, e.g. the engine output speed, to a second threshold, such as the second threshold 204 shown in Figure 4. The second threshold 204 of Figure 4 is an exemplary full-recovery-threshold that may be applicable to scenario B described above. In other words, in one embodiment, the control unit may set the second threshold 204 to an engine output speed value that is equal to the preferred/normal operating speed of the tractor engine.

The control unit may maintain the ground engaging tools in their engine recovery state for as long as the engine speed has not reached the second threshold 204. Once the second threshold 204 has been reached by the engine output speed, the control unit may determine an implement-control-signal for transferring the ground engaging tools back into their previous operating state that was used before initiation their engine recovery state.

Alternatively or additionally, the method may also comprise maintaining the ground engaging tools in the engine recovery state for a predetermined recovery time after the engine parameter (e.g. the engine speed) has exceeded the first threshold 202. In this case, no second threshold is required.

In some embodiments, the control unit may be configured to revert the ground engaging tools into their normal operational state, if the engine does not recover within a predetermined time period. In particular, after one or more of the ground engaging tools are transferred into an engine recovery state, the control-unit of this embodiment may keep monitoring the engine output speed. If the engine output speed does not recover within the predetermined time period after transferring the one or more ground engaging tools into an engine recovery state, the control unit may transfer all of the ground engaging tools back into their normal state of operation. For example, the control unit will transfer the ground engaging tools back into their normal operational state if the engine recovery state has not led to engine speed recovery after a time period it takes for the vehicle to process at least 5m of the field. The control unit may thus determine that the engine recovery state is ineffective and may inform the operator accordingly. The operator may then choose to compensate the excess load by changing the work vehicle transmission rather than relying on engine recovery states of the ground engaging tools.

Although the above has been described utilising the engine speed as the engine operating parameter and comparing it to an engine speed threshold, it is of course equivalently possible to utilise other engine operating parameters, such as the engine-output-torque and compare the engine-output-torque to an engine-torque-threshold in determining an appropriate implement-control-signal.

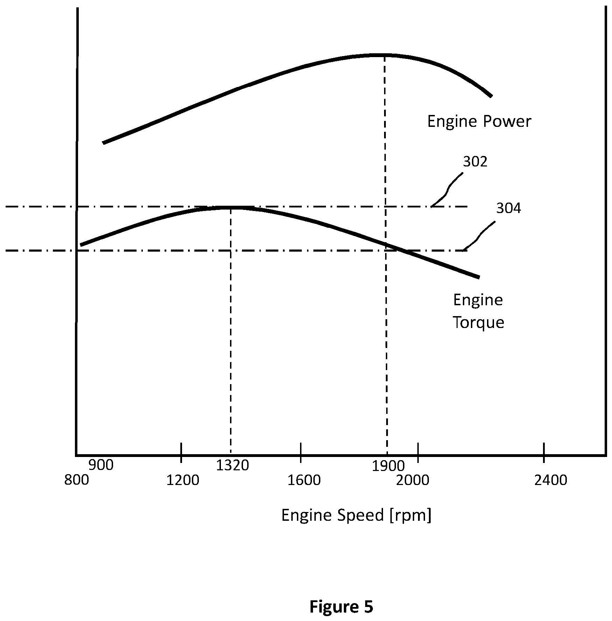

In one embodiment, shown in Figure 5, the first threshold 302 may be an engine-torque-threshold set at the maximum-engine-torque-output value such that the ground engaging tools are only moved to their engine recovery state if the current output torque of the engine has reached or comes sufficiently close to the maximum-engine-torque-output of the engine. For instance, if a difference between the engine-output-torque and the first threshold 302 is below a predetermined stone-trip-bias-threshold, the control unit may determine a suitable implement-control-signal for moving one or more of the ground engaging tools into their engine recovery state.

In one example, the stone-trip-bias-threshold is set between 10% or 30%, preferably 20%, of the first threshold 302. If a difference between the first threshold 302 and the engine-output-torque (i.e. the engine operating parameter) is less than 20% of the first threshold (e.g. the engine-output-torque is less than 20% below the maximum-engine-output-torque), the control unit will determine an appropriate implement-control-signal to set one or more of the ground engaging tools into their engine recovery state. This may avoid stalling of the engine due to a future collision of the ground engaging tool with a subterranean obstacle.

Full recovery of the engine may be determined by comparison of the engine torque (i.e. the engine operating parameter) to a second threshold, such as the second threshold 304 shown in Figure 5. The control unit may keep the ground engaging tools in their engine recovery state for as long as the engine torque has not fallen below the second threshold 304. Once the engine torque has fallen below the second threshold 304, the control unit may determine an implement-control-signal that transfers one or more of the ground engaging tools back into their previous operating state that was employed before initiation of the engine recovery state. Alternatively, the method may also comprise maintaining the ground engaging tools in the engine recovery state for a predetermined recovery time after the engine parameter (e.g. the engine torque) has fallen below the first threshold 302. In this case, no second threshold is required.

While the above has been described in relation to agricultural ploughs, it should be understood that the present disclosure is generally applicable to any agricultural machinery comprising one or more agricultural implements.

The scope of the invention is defined by the appended claims.

## Claims

1. A computer-implemented method for controlling agricultural machinery, wherein the agricultural machinery comprises an agricultural work vehicle (7) with an engine for moving the agricultural work vehicle across a field, and an agricultural implement (10) connected to the agricultural work vehicle and comprising at least one ground engaging tool (22a, 22b, 24a, 24b,26a, 26b,27a, 28b, 30a, 30b), wherein the method comprises:
receiving an engine operating parameter representative of an engine output of the engine;
comparing the engine operating parameter to a predetermined first threshold; and
determining an implement-control-signal, based on a result of the comparing step, for transferring the at least one ground engaging tool into an engine recovery state for reducing a work vehicle load,
**characterised in that** the agricultural implement comprises a stone trip mechanism for biasing the at least one ground engaging tool into the soil at a predetermined bias force, the engine operating parameter being an engine-output-torque, and wherein the method further comprises producing an implement-control-signal comprising instructions for reducing the bias force if a difference between the engine operating parameter and the first threshold is below a predetermined stone-trip-bias-threshold.

2. The computer-implemented method of Claim 1, wherein the first threshold is representative of an engine stall or an engine lug.

3. The computer-implemented method of Claim 1 or 2, wherein the engine operating parameter is an engine speed or an engine torque.

4. The computer-implemented method of any one of Claims 1 to 3, wherein the implement-control-signal comprises one or more of:
instructions for changing the working depth of the ground engaging tool;
instructions for removing the ground engaging tool from the soil;
instructions for changing the plough width of the ground engaging tools;
instructions for changing the angle of the ground engaging tool with respect to a horizontal plane;
instructions for decreasing a bias of a stone-trip-mechanism of the ground engaging tools.

5. The computer-implemented method of any one of Claims 1 to 4, wherein the agricultural implement is a plough implement comprising a plurality of ground engaging tools for producing a plurality of parallel furrows for each working row of a field, wherein the method comprises producing an implement-control-signal comprising instructions for removing from the soil one or more ground engaging tools that exhibit the furthest distance to furrows of a previous working row.

6. The computer-implemented method of any one of Claims 1 to 5, comprising providing the determined implement-control-signal to an actuator mechanism of the agricultural machinery between tillage of successive working rows.

7. The computer-implemented method of any one of Claims 1 to 6, comprising delaying a transfer of the at least one ground engaging tool into the engine recovery state until a current working row is completed, if the comparison results indicates that a reduction in work vehicle load is required.

8. The computer-implemented method of Claim 7, comprising temporarily increasing a wheel torque of the agricultural work vehicle, if movement of the at least one ground engaging tool into its engine recovery state is delayed until the current working row is completed.

9. The computer-implemented method of any one of Claims 1 to 8, wherein the implement-control-signal is determined incrementally, preferably by:
determining a first implement-control-signal for transferring at least the one ground engaging tool into a first engine recovery state for reducing a work vehicle load;
comparing the engine operating parameter to the predetermined first threshold;
determining a second implement-control-signal, based on a result of the comparing step, for transferring at least one ground engaging tool into a second engine recovery state for reducing a work vehicle load further compared to the first engine recovery state.

10. The computer-implemented method of any one of Claims 1 to 9, wherein the implement-control-signal is determined on the basis of a difference between the operating parameter and the first threshold such that the engine operating parameter will exceed or fall below the predetermined first threshold upon transfer of the ground engaging tool into the engine recovery state.

11. The computer-implemented method of any one of Claims 1 to 10, comprising maintaining the ground engaging tool in the engine recovery state for a predetermined recovery time after the engine parameter has exceeded or fallen below the predetermined first threshold.

12. The computer-implemented method of any one of Claims 1 to 11, comprising maintaining the ground engaging tool in the engine recovery state until the engine parameter has exceeded or fallen below a predetermined second threshold.

13. A control unit for use with an agricultural system, wherein the agricultural system comprises:
an agricultural work vehicle (7) comprising an engine for moving the agricultural work vehicle;
an agricultural implement (10) comprising at least one ground engaging tool (22a, 22b, 24a, 24b, 26a, 26b, 28a, 28b, 30a, 30b);
a stone-trip-mechanism for biasing the at least one ground engaging tool into the soil at a predetermined bias force; and
the control unit is configured to:
receive an engine operating parameter representative of an engine output;
compare the engine operating parameter to a predetermined first threshold;
determine an implement-control-signal for moving the at least one ground engaging tool into an engine recovery state so as to reduce a load based on a result of the comparison;
**characterised in that** the engine operating parameter being an engine-output-torque, and wherein the control unit is further configured to produce an implement-control-signal comprising instructions for reducing the bias force if a difference between the engine operating parameter and the first threshold is below a predetermined stone-trip-bias-threshold.

14. A computer program configured to perform the method of any of Claims 1 to 12 when executed with the control unit of Claim 13.

## Patentansprüche

1. Computerimplementiertes Verfahren zur Steuerung einer landwirtschaftlichen Maschine, wobei die landwirtschaftliche Maschine ein landwirtschaftliches Arbeitsfahrzeug (7) mit einem Motor zum Bewegen des landwirtschaftlichen Arbeitsfahrzeugs über ein Feld und ein landwirtschaftliches Arbeitsgerät (10) umfasst, das mit dem landwirtschaftlichen Arbeitsfahrzeug verbunden ist und mindestens ein Bodenbearbeitungswerkzeug (22a, 22b, 24a, 24b, 26a, 26b, 28a, 28b, 30a, 30b) aufweist, wobei das Verfahren die folgenden Schritte umfasst:
Empfangen eines Motor-Betriebsparameters, der kennzeichnend für eine Ausgangsleistung des Motors ist;
Vergleichen des Motor-Betriebsparameters mit einem vorbestimmten ersten Schwellenwert; und
Bestimmen eines Arbeitsgerät-Steuersignals auf Basis eines Ergebnisses des Vergleichsschritts, um das mindestens eine Bodenbearbeitungswerkzeug zur Verringerung einer Last des Arbeitsfahrzeugs in einen Motor-Recovery-Zustand zu überführen,
**dadurch gekennzeichnet, dass**
das landwirtschaftliche Arbeitsgerät einen Steinsicherungsmechanismus zum Vorspannen des mindestens einen Bodenbearbeitungswerkzeugs in den Erdboden mit einer vorbestimmten Vorspannkraft aufweist, wobei der Motor-Betriebsparameter ein Motor-Ausgangsdrehmoment ist, und wobei das Verfahren weiterhin das Erzeugen eines Arbeitsgerät-Steuersignals aufweist, das Anweisungen zur Verringerung der Vorspannkraft enthält, wenn eine Differenz zwischen dem Motor-Betriebsparameter und dem ersten Schwellenwert unter einem vorbestimmten Steinsicherungs-Vorspann-Schwellenwert liegt.

2. Computerimplementiertes Verfahren nach Anspruch 1, wobei der erste Schwellenwert charakteristisch ist für einen Motorstillstand oder eine Motordrückung.

3. Computerimplementiertes Verfahren nach Anspruch 1 oder 2, wobei der Motor-Betriebsparameter eine Motordrehzahl oder ein Motordrehmoment ist.

4. Computerimplementiertes Verfahren nach einem der Ansprüche 1 bis 3, wobei das Arbeitsgerät-Steuersignal eines oder mehrere der folgenden aufweist:
Anweisungen zur Änderung der Arbeitstiefe des Bodenbearbeitungswerkzeugs;
Anweisungen zum Entfernen des Bodenbearbeitungswerkzeugs aus dem Erdboden;
Anweisungen zur Änderung der Pflugbreite des Bodenbearbeitungswerkzeugs;
Anweisungen zur Änderung des Winkels des Bodenbearbeitungswerkzeugs bezüglich einer horizontalen Ebene;
Anweisungen zur Verringerung einer Vorspannung des Steinsicherungsmechanismus des Bodenbearbeitungswerkzeugs.

5. Computerimplementiertes Verfahren nach einem der Ansprüche 1 bis 4, wobei das landwirtschaftliche Arbeitsgerät ein Pfluggerät ist, das eine Mehrzahl von Bodenbearbeitungswerkzeugen zur Erzeugung einer Mehrzahl von parallelen Ackerfurchen für jede Arbeitsreihe in einem Feld aufweist, wobei das Verfahren das Erzeugen eines Arbeitsgerät-Steuersignals umfasst, das Anweisungen zum Entfernen von einem oder mehreren Bodenbearbeitungswerkzeugen, die den größten Abstand zu den Ackerfurchen einer vorhergehenden Arbeitsreihe haben, aus dem Erdboden enthält.

6. Computerimplementiertes Verfahren nach einem der Ansprüche 1 bis 5, das das Bereitstellen des vorbestimmten Arbeitsgerät-Steuersignals einem Betätigungsmechanismus der landwirtschaftlichen Maschine zwischen der Bodenbearbeitung von aufeinanderfolgenden Arbeitsreihen aufweist.

7. Computerimplementiertes Verfahren nach einem der Ansprüche 1 bis 6, das das Verzögern einer Überführung mindestens eines Bodenbearbeitungswerkzeugs in den Motor-Recovery-Zustand aufweist, bis eine aktuelle Arbeitsreihe fertiggestellt ist, wenn die Vergleichsergebnisse anzeigen, dass eine Verringerung der Last des Arbeitsfahrzeugs erforderlich ist.

8. Computerimplementiertes Verfahren nach Anspruch 7, das das vorübergehende Erhöhen eines Rad-Drehmoments des landwirtschaftlichen Arbeitsfahrzeugs aufweist, wenn die Bewegung des mindestens einen Bodenbearbeitungswerkzeugs in seinen Motor-Recovery-Zustand verzögert wird, bis die aktuelle Arbeitsreihe fertiggestellt ist.

9. Computerimplementiertes Verfahren nach einem der Ansprüche 1 bis 8, wobei das Arbeitsgerät-Steuersignal inkremental bestimmt wird, vorzugsweise durch:
Bestimmen eines ersten Arbeitsgerät-Steuersignals zur Überführung mindestens des einen Bodenbearbeitungswerkzeugs in einen ersten Motor-Recovery-Zustand zur Verringerung einer Last des Arbeitsfahrzeugs;
Vergleichen des Motor-Betriebsparameters mit dem vorbestimmten ersten Schwellenwert;
Bestimmen eines zweiten Arbeitsgerät-Steuersignals auf Basis eines Ergebnisses des Vergleichsschritts, um mindestens ein Bodenbearbeitungswerkzeug in einen zweiten Motor-Recovery-Zustand zu überführen, um eine Last des Arbeitsfahrzeugs im Vergleich zu dem ersten Motor-Recovery-Zustand weiter zu verringern.

10. Computerimplementiertes Verfahren nach einem der Ansprüche 1 bis 9, wobei das Arbeitsgerät-Steuersignal auf Basis einer Differenz zwischen dem Betriebsparameter und dem ersten Schwellenwert derart bestimmt wird, dass der Motor-Betriebsparameter den vorbestimmten ersten Schwellenwert nach der Überführung des Bodenbearbeitungswerkzeugs in den Motor-Recovery-Zustand übersteigt oder unter diesen abfällt.

11. Computerimplementiertes Verfahren nach einem der Ansprüche 1 bis 10, das das Beibehalten des Bodenbearbeitungswerkzeugs in dem Motor-Recovery-Zustand für eine vorbestimmte Recovery-Zeit aufweist, nachdem der Motor-Betriebsparameter den vorbestimmen ersten Schwellenwert überstiegen hat oder unter diesen abgefallen ist.

12. Computerimplementiertes Verfahren nach einem der Ansprüche 1 bis 11, das das Beibehalten des Bodenbearbeitungswerkzeugs in dem Motor-Recovery-Zustand aufweist, bis der Motor-Betriebsparameter einen vorbestimmten zweiten Schwellenwert überstiegen hat oder unter diesen abgefallen ist.

13. Steuereinheit zur Verwendung mit einem landwirtschaftlichen System, wobei das landwirtschaftliche System aufweist:
ein landwirtschaftliches Arbeitsfahrzeug (7) mit einem Motor zum Bewegen des landwirtschaftlichen Arbeitsfahrzeugs;
ein landwirtschaftliches Arbeitsgerät (10) mit mindestens einem Bodenbearbeitungswerkzeug (22a, 22b, 24a, 24b, 26a, 26b, 28a, 28b, 30a, 30b);
einen Steinsicherungsmechanismus, um das mindestens eine Bodenbearbeitungswerkzeug mit einer vorbestimmten Vorspannkraft in den Erdboden vorzuspannen; und
eine Steuereinheit, die dazu eingerichtet ist, um Folgendes auszuführen:
Empfangen eines Motor-Betriebsparameters, der kennzeichnend für eine Ausgangsleistung des Motors ist;
Vergleichen des Motor-Betriebsparameters mit einem vorbestimmten ersten Schwellenwert;
Bestimmen eines Arbeitsgerät-Steuersignals, um das mindestens eine Bodenbearbeitungswerkzeug in einen Motor-Recovery-Zustand zu überführen, um eine Last auf Basis eines Ergebnisses des Vergleichs zu verringern,
**dadurch gekennzeichnet, dass**
der Motor-Betriebsparameter ein Motor-Ausgangsdrehmoment ist, und wobei die Steuereinheit weiterhin dazu eingerichtet ist, ein Arbeitsgerät-Steuersignal zu erzeugen, das Anweisungen zur Verringerung der Vorspannkraft umfasst, wenn eine Differenz zwischen dem Motor-Betriebsparameter und dem ersten Schwellenwert unter einem vorbestimmten Steinsicherungs-Vorspann-Schwellenwert liegt.

14. Computerimplementiertes Programm, das dazu eingerichtet ist, das Verfahren nach einem der Ansprüche 1 bis 12 durchzuführen, wenn es mit der Steuereinheit nach Anspruch 13 ausgeführt wird.

## Revendications

1. Procédé mis en oeuvre par ordinateur pour commander une machine agricole, dans lequel la machine agricole comprend un véhicule de travail agricole (7) doté d'un moteur pour déplacer le véhicule de travail agricole à travers un champ, et un outil agricole (10) raccordé au véhicule de travail agricole et comprenant au moins un outil d'engagement avec le sol (22a, 22b, 24a, 24b, 26a, 26b, 27a, 28b, 30a, 30b), dans lequel le procédé comprend :
la réception d'un paramètre de fonctionnement de moteur représentatif d'une puissance moteur du moteur ;
la comparaison du paramètre de fonctionnement du moteur avec un premier seuil prédéterminé ; et
la détermination d'un signal de commande d'outil, sur la base d'un résultat de l'étape de comparaison, pour transférer l'au moins un outil d'engagement avec le sol dans un état de récupération de moteur afin de réduire la charge d'un véhicule de travail,
**caractérisé en ce que**
l'outil agricole comprend un mécanisme de déclenchement en cas de pierre pour solliciter l'au moins un outil d'engagement avec le sol dans le sol à une force de sollicitation prédéterminée, le paramètre de fonctionnement du moteur étant un couple de sortie du moteur, et dans lequel le procédé comprend en outre la production d'un signal de commande d'outil comprenant des instructions pour réduire la force de sollicitation si une différence entre le paramètre de fonctionnement du moteur et le premier seuil est inférieure à un seuil prédéterminé de sollicitation de déclenchement en cas de pierre.

2. Procédé mis en oeuvre par ordinateur selon la Revendication 1, dans lequel le premier seuil est représentatif d'un calage du moteur ou d'un blocage du moteur.

3. Procédé mis en oeuvre par ordinateur selon la Revendication 1 ou la Revendication 2, dans lequel le paramètre de fonctionnement du moteur est un régime moteur ou un couple moteur.

4. Procédé mis en oeuvre par ordinateur selon l'une quelconque des revendications 1 à 3, dans lequel le signal de commande de l'outil comprend une ou plusieurs :
instructions pour modifier la profondeur de travail de l'outil d'engagement avec le sol ;
instructions pour retirer l'outil d'engagement avec le sol du sol ;
instructions pour modifier la largeur de labour des outils d'engagement avec le sol ;
instructions pour modifier l'angle de l'outil d'engagement avec le sol par rapport à un plan horizontal ;
instructions pour diminuer une sollicitation d'un mécanisme de déclenchement en cas de pierre des outils d'engagement avec le sol.

5. Procédé mis en oeuvre par ordinateur selon l'une quelconque des revendications 1 à 4, dans lequel l'outil agricole est un outil de labour comprenant une pluralité d'outils d'engagement avec le sol pour produire une pluralité de sillons parallèles pour chaque rang de travail d'un champ, dans lequel le procédé comprend la production d'un signal de commande d'outil comprenant des instructions pour le retrait du sol d'un ou de plusieurs outils d'engagement avec le sol qui présentent la distance la plus éloignée des sillons d'un précédent rang de travail.

6. Procédé mis en oeuvre par ordinateur selon l'une quelconque des revendications 1 à 5, comprenant la fourniture du signal de commande d'outil déterminé à un mécanisme d'actionnement de la machine agricole entre le travail du sol en rangs de travail successifs.

7. Procédé mis en oeuvre par ordinateur selon l'une quelconque des revendications 1 à 6, comprenant le retardement d'un transfert de l'au moins un outil d'engagement avec le sol dans l'état de récupération du moteur jusqu'à ce qu'un rang de travail en cours soit terminé, si les résultats de la comparaison indiquent qu'une réduction de la charge du véhicule de travail est nécessaire.

8. Procédé mis en oeuvre par ordinateur selon la Revendication 7, comprenant l'augmentation temporaire d'un couple de roue du véhicule de travail agricole, si le mouvement de l'au moins un outil d'engagement avec le sol dans son état de récupération du moteur est retardé jusqu'à ce que le rang de travail en cours soit terminé.

9. Procédé mis en oeuvre par ordinateur selon l'une quelconque des revendications 1 à 8, dans lequel le signal de commande de l'outil est déterminé par incréments, de préférence par :
la détermination d'un premier signal de commande d'outil pour transférer l'au moins un outil d'engagement avec le sol dans un premier état de récupération de moteur afin de réduire la charge d'un véhicule de travail ;
la comparaison du paramètre de fonctionnement du moteur au premier seuil prédéterminé ;
la détermination d'un second signal de commande d'outil, sur la base d'un résultat de l'étape de comparaison, pour transférer au moins un outil d'engagement avec le sol dans un second état de récupération de moteur afin de réduire la charge d'un véhicule de travail en outre par rapport au premier état de récupération du moteur.

10. Procédé mis en oeuvre par ordinateur selon l'une quelconque des revendications 1 à 9, dans lequel le signal de commande de l'outil est déterminé sur la base d'une différence entre le paramètre de fonctionnement et le premier seuil de telle sorte que le paramètre de fonctionnement du moteur sera supérieur ou inférieur au premier seuil prédéterminé lors du transfert de l'outil d'engagement avec le sol dans l'état de récupération du moteur.

11. Procédé mis en oeuvre par ordinateur selon l'une quelconque des revendications 1 à 10, comprenant le maintien de l'outil d'engagement avec le sol dans l'état de récupération du moteur pendant un temps de récupération prédéterminé après que le paramètre du moteur ait été supérieur ou inférieur au premier seuil prédéterminé.

12. Procédé mis en oeuvre par ordinateur selon l'une quelconque des revendications 1 à 11, comprenant le maintien de l'outil d'engagement avec le sol dans l'état de récupération du moteur jusqu'à ce que le paramètre du moteur ait été supérieur ou inférieur au second seuil prédéterminé.

13. Unité de commande destinée à être utilisée avec un système agricole, dans laquelle le système agricole comprend :
un véhicule de travail agricole (7) comprenant un moteur pour déplacer le véhicule de travail agricole ;
un outil agricole (10) comprenant au moins un outil d'engagement avec le sol (22a, 22b, 24a, 24b, 26a, 26b, 28a, 28b, 30a, 30b) ;
un mécanisme de déclenchement en cas de pierre pour solliciter l'au moins un outil d'engagement avec le sol dans le sol à une force de sollicitation prédéterminée ; et
l'unité de commande est configurée pour :
réceptionner un paramètre de fonctionnement de moteur représentatif d'une puissance moteur ;
comparer le paramètre de fonctionnement du moteur à un premier seuil prédéterminé ;
déterminer un signal de commande d'outil pour déplacer l'au moins un outil d'engagement avec le sol dans un état de récupération de moteur de sorte à réduire une charge sur la base d'un résultat de la comparaison ;
**caractérisée en ce que**
le paramètre de fonctionnement du moteur est un couple de sortie du moteur, et dans lequel l'unité de commande est en outre configurée pour produire un signal de commande d'outil comprenant des instructions pour réduire la force de sollicitation si une différence entre le paramètre de fonctionnement du moteur et le premier seuil est inférieure à un seuil prédéterminé de sollicitation de déclenchement en cas de pierre.

14. Un programme informatique configuré pour exécuter le procédé selon l'une quelconque des revendications 1 à 12 lorsqu'il est exécuté avec l'unité de commande selon la Revendication 13.
